Europäisches Patentamt

European Patent Office

Office européen des brevets

(19)

(11) EP 1 536 396 A2

(12) **EUROPEAN PATENT APPLICATION**

(43) Date of publication:
01.06.2005 Bulletin 2005/22

(51) Int Cl.⁷: **G09B 25/00**

(21) Application number: 04104993.3

(22) Date of filing: 12.10.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **21.10.2003 IT MI20032041**

(71) Applicant: **Beta Nit s.r.l.**
**26865 San Rocco Al Porto (LO) (IT)**

(72) Inventors:
• **PODESTA', Giulio Maria**
**I-29100, PIACENZA (IT)**
• **PRATI, Michele**
**I-29014, CASTELL'ARQUATO (PC) (IT)**

(74) Representative: **Mittler, Enrico et al**
**Mittler & C. s.r.l.,**
**Viale Lombardia, 20**
**20131 Milano (IT)**

(54) **Simulation system for the illumination of a model**

(57)     The present invention refers to a system and a method of illumination simulation and a photogoniometer.

In one of the its embodiments, the simulation system for the illumination of a model includes: a light source that provides a first light radiation of said model; said model is placed on a structure; said structure and said light source can be moved relative to each other by at least one movement device; a first computer controls said movement device and serves to move said structure and said light source relative to each other; at least one light sensitive sensor located on said model illuminated by said first irradiance that sends a signal proportional to the incident light to said first computer; said first computer moves said structure and said light source to predetermined positions so that said light source illuminates said model in a predetermined way; said first computer receives said signal proportional to the incident light for each predetermined position and memorises said signal; said first computer is connected to a second computer to which it sends the signals memorised.

Fig.6

EP 1 536 396 A2

## Description

The present invention refers to a system and a method for simulating illumination and a photogoniometer.

The instruments for projecting natural light that have been developed over the centuries by architects, experts and mathematicians can be traced to two basic approaches, one based on the mathematical modelling of the physical phenomenon, the other which reproduces the phenomenon in the laboratory, under precise conditions, in such a way that the results are reproducible in space and time thus allowing comparisons to be made.

The instruments based on mathematical models use simplified algorithms that lend themselves to calculations by hand for the verification of some of the basic technical illumination characteristics of a room, such as the average illumination on the work surface and the distribution of luminance values. These algorithms, for the simplifications they impose to the geometry of the environment and to the materials of which it is made, make it possible only to examine luminous effects and not to design them.

Researchers in the technical illumination sector have developed more complex methods that lend themselves to implementation on computers in order to study environments characterised by different reflection coefficients.

The instruments based on physical models, such as heliodons, which are very simple natural light simulators, are usually used in the initial design phases in order to examine innovative configurations of the geometry of openings or particular materials. They are commonly found in many architects'studios on account of their very low cost.

Three types of heliodon can be identified on the basis of the characteristics of the light source which simulates natural light: direct light simulators which make it possible to simulate only sunlight; diffuse light simulators that make it possible to evaluate light from the sky; simulations done under the real sky which give excellent results.

Artificial skies instead are the exclusive attribute of few technical illumination research laboratories in the world due to their high construction and running costs.

In the last ten years natural lighting design equipment based on hybrid approaches have been developed and as time passes by these draw the interest of researchers more and more.

In view of the state of the technique described, the aim of the present invention is to create an illumination simulation system of the hybrid type that satisfies the following requirements.

It must ensure constant reliability of the simulation results so that it can be used profitably right from the initial design phases by non specialist designers.

It must have a low cost so that it can be used by a large number of designers and for all designs, independently of the (economic) scale of the project.

It must make the design of natural lighting as easy as that of artificial lighting.

It must permit the analysis of simulation results in a way that the consequences of natural lighting design choices are clear.

It must be easy to use and must not impose design procedures that may limit the designer's liberty.

It must allow the quantitative and qualitative evaluation of technical illumination performance, in other words the determination of illumination distribution, glare coefficients and images of the environment under study.

It must permit the examination of design choices in relation to geometrical configurations and the properties of materials.

It must be capable of simulating the type of natural lighting of the place in which the design solution is to be examined.

It must provide the simulation results in graphic and tabular form in a way that allows them to be reprocessed.

It must have particularly limited maintenance requirements in order to reduce running costs and to increase productivity in installations of a departmental type.

It must facilitate the integration of natural light with artificial light without opposing one against the other.

It must have low power consumption.

It must reproduce the colour toning caused by the properties of materials.

It must be relatively small so that it can be placed in any room.

It must also be compact, portable and usable by remote control stations.

This aim is reached by means of a model illumination simulation system including: a light source that provides a first light radiation of said model; said model is placed on a structure; this structure and said light source are mobile relative to each other by means of at least one movement device; a first computer controls said movement device and moves said structure and said light source in relation to each other; at least one light sensitive sensor placed on said model illuminated by said first radiation which sends a signal proportional to the incident light to said first computer; said first computer moves said structure and said light source to predetermined positions so that said light source illuminates said model in a predetermined way; said first computer receives said signal that is proportional to the incident light for each predetermined position and memorises said signal; said first computer is connected to a second computer to which it sends the signals memorised.

This aim is also reached by means of a photogoniometer including a simulation system for illuminating a model in accordance with claim 1.

This aim can also be reached using a simulation method for illuminating a model consisting of the following steps: a lamp is switched on; the value obtained from a calibration light sensor is measured; the various parts of a model are illuminated from variable angles; data from a number of light sensors placed in predetermined positions in said model is received; the information received is normalised with the value from said calibration light sensor; the normalised data for each part of the model is recomposed; the normalised data is memorised; the normalised data is processed.

The characteristics and advantages of the present invention will be evident from the following detailed description of an embodiment thereof, illustrated as non-limiting example in the enclosed drawings in which:

Figure 1 schematically shows the simulator in a closed position;
Figure 2 schematically shows the simulator in the open position;
Figure 3 shows a part of the simulator;
Figure 4 shows a side view of the part of the simulator in figure 3 in a vertical position;
Figure 5 shows a side view of the part of the simulator in figure 3 in an inclined position;
Figure 6 shows a perspective view of the part of the simulator in figure 3 including the support used as a photogoniometer;
Figure 7 shows a flow diagram of the circuits located at the edge of the simulator;
Figure 8 shows a partial flow diagram of the photodiode amplifier control.

The illumination simulation system is based on a hybrid approach, consisting of a physical simulation carried out on a model of the environment to be studied and successively a mathematical simulation that processes data coming from the physical simulation in order to arrive at different simulations depending on the conditions of the sky to be analysed.

The physical simulation carried out on a real model, although of reduced dimensions, is what guarantees the quality and reliability of the results independently of the complexity of the model under study; in fact the light phenomenon of the interaction between light and surfaces is not reduced to a mathematical model but is reproduced as happens in reality. It is obvious that not all the conditions of natural light in which a room may be located can be reproduced by means of artificial light sources, therefore a number of simplifications and approximations have been made that make it possible to simulate the infinite variety of natural light sources by means of a single artificial light source.

The sun is simulated using a lamp provided with suitable optics that produces a constant illumination with parallel rays on the plane of the model.

The celestial hemisphere is broken down into elements according to the same criteria for luminance measurement used by IDMP stations, and is reconstructed by the superimposition of the measurements made for each element.

On the basis of the data obtained from a miniature TV camera and a number of sensors positioned by the user before scanning the interior of the physical model, a mathematical simulation is done.

The flexibility of mathematical simulation makes it possible to evaluate the environment under a standard sky so as to be able to make immediate comparisons with preceding solutions or alternatives described in the literature. It is possible to study solar shadows. It is possible to examine the environment in limiting conditions under clear skies or completely overcast skies on the basis of data provided by the local meteorological stations. It is possible to examine the project under the prevailing sky conditions and do an energy analysis (using software already generally available) to evaluate the annual savings in running costs.

The physical simulation is done inside a device called simulator or scanner which constitutes the hardware element of the system while the mathematical simulation part is done by software installed on both the computer inside the scanner and an external computer to which the scanner is connected. The physical simulation consists of two steps: in the first step the data is obtained and its reliability verified on the first computer inside the scanner; the second step begins with the analysis of the simulation on a computer external to the scanner.

The natural light simulation system consisting of the scanner located in the vicinity of the model construction laboratory and a set of programmes capable of processing simulations wherever they are required through a network of computers integrates easily into the existing organisation of the design work.

The decentralised organisation of the analysis work ensures that all users/designers use instruments over which they have complete mastery (type of computer, operating system, data processing programmes), the possibility of producing different analyses from the same scanning (for example one user may be interested in evaluating coefficients of glare while another analyses annual energy savings) and the possibility, using a small portable computer, of performing studies wherever there is a telephone line or access to the interconnection network.

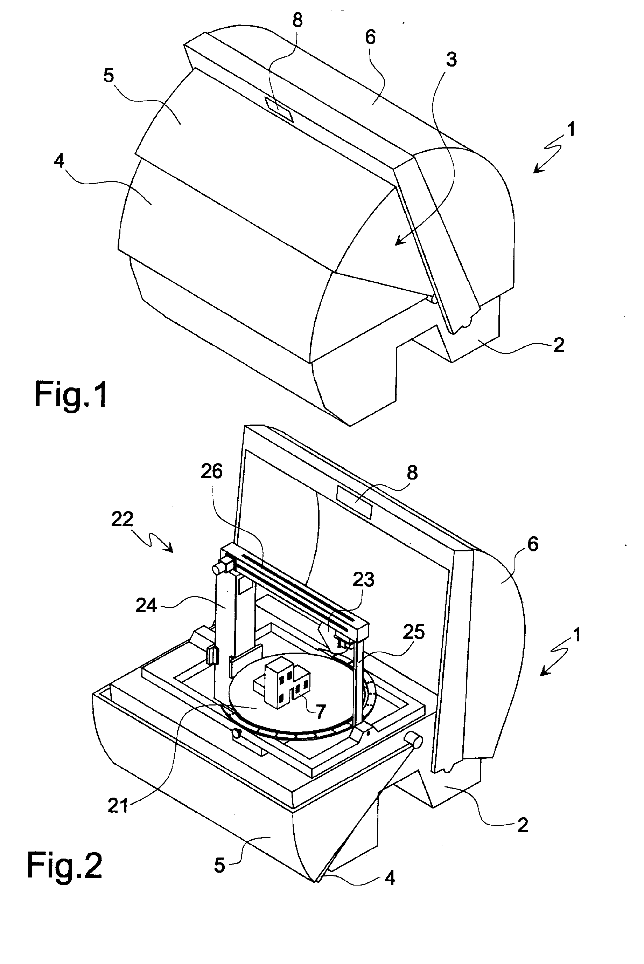

In reference now to Figure 1 showing the simulator and scanner 1 schematically in the closed position; this consists of a base 2 and a cover 3 comprising three pieces or segments 4, 5 and 6. The segments 4 and 5 are hinged together at a point near the centre of the base 2. Segment 6 is hinged in a peripheral position on the base 2. In the closed position the segments 4 , 5 and 6 are fixed in a position that keeps them stable. On segment 6 there is a touch screen monitor 8. The dimensions of the simulator 1 are small so that it can be transported and placed in any room and such that it can be contained inside a cube of about 120-140 cm.

In Figure 2, showing schematically the simulator or scanner 1 in the open position, segments 4 and 5 can be seen open in a withdrawn position at the front of the simulator 1 and segment 6 open at the back of the simulator 1. A support 21 can be seen on which the model 7 to be analysed is placed. On the base an illumination structure 22 is placed consisting of two vertical arms (in rest position) 24 and 25 connected together by a horizontal arm 26. The illumination system is located inside arm 24, which is larger than arm 25. The light beam is projected perpendicularly from arm 24, in a position near to the join of arm 24 to arm 26 so that it can be reflected by a mirror 23 positioned so as to illuminate the model 7 located on the support 21.

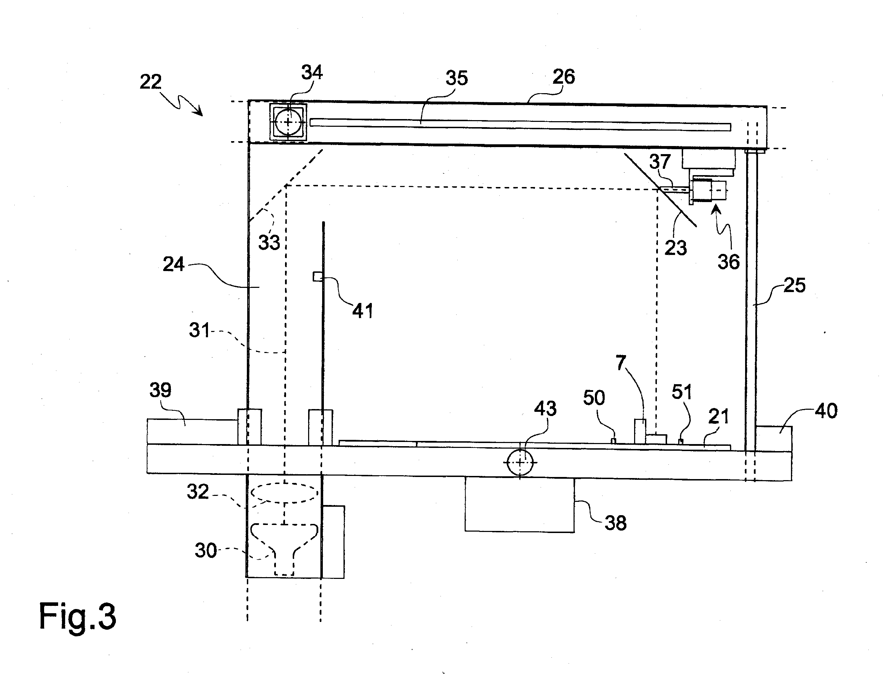

Figure 3 shows a part of the simulator including an illumination lamp 30. The lamp 30 is located at the base of the arm 24 and its luminous beam, represented by a dotted line 31, passes through a diaphragm (not shown) and a lens 32 of diameter $a \cdot \sqrt{2}$, is then reflected by a mirror 33, inside arm 24, then reflected again by the mirror 23 and reaches the model 7 located on the support 21. The lamp 30 is preferably a metal iodide type with short arc and incorporated elliptical reflector. The arc of the lamp is positioned at the first focus of the ellipse of the reflector, while the diaphragm is located at the second focus which coincides with the focal point of the positive lens and constitutes a telecentric optical system. The diameter of the diaphragm varies in order to be able to control the divergence of the beams and the illumination on the model.

A motor 34 is mounted on the horizontal arm 26, capable of sliding a sliding block 36 along a guide 35 located inside the arm 26. Attached to the block is a motor 44 which moves the mirror 23 by means of a horizontal rotating shaft. The mirror 23 can thus be rotated and moved along almost the entire length of the arm 26.

The mirrors project a square beam of light $a \times a$ , mirror 33 having a rectangular shape with side dimensions $a$ and $a \cdot \sqrt{2}$ where $a$ is the length of the side of the square inscribed in the lens. The second mirror is circular of diameter $a \cdot 2$ but moved along two symmetrical cords located at a distance $a \cdot \sqrt{2}$. The rotation of the second mirror around the horizontal axis permits the orientation of the light rays independently of the inclination of the arm of the optical assembly. The support 21, connected to a vertical shaft (not shown) housed on the base 38, may rotate and can also be moved upwards by operating the handwheel 43 by means of suitable mechanisms not shown.

The arms 24 and 25, which are vertical when in the rest position, can rotate around a horizontal axis by means of a suitable motor not shown, as they are hinged on the base 2, at points 39 and 40.

At least one photodiode is located on the support 21 and/or on the model 7 and/or in other predetermined positions. The figure shows two photodiodes 50 and 51.

It is also possible to locate a TV camera jointly internally or externally with the model, whichever the operator considers opportune. It is also possible for the operator to locate one or more lights (not shown) in predetermined positions in order to simulate particular artificial lighting situations.

Inside relative to arm 24 a photodiode 41 is located at a position intersected by the light beam 31 for the calibration of the illumination system.

All the movable parts of the system are driven by motors controlled by electronic circuits located on the simulator 1.

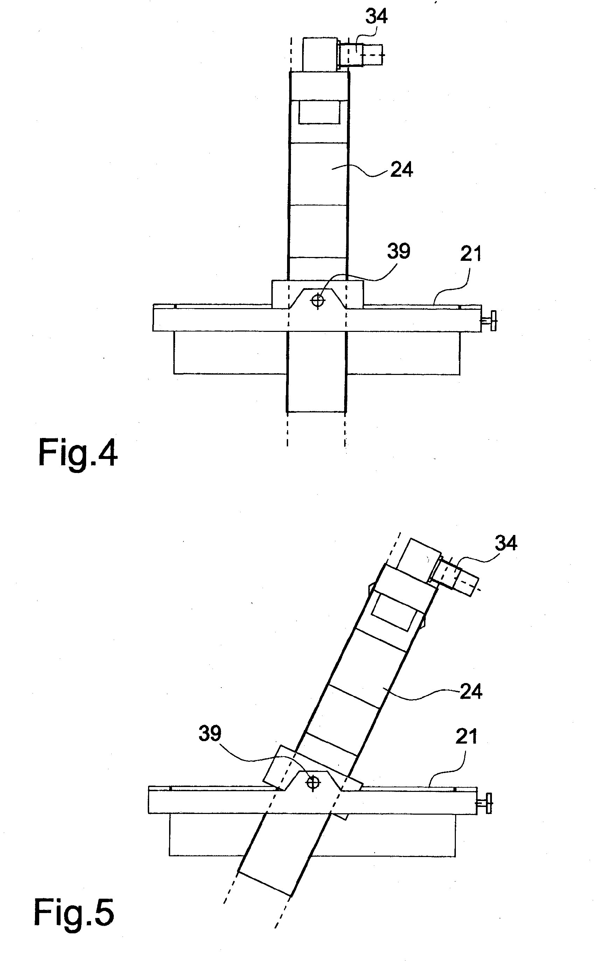

Figure 4 shows a side view of the part of the simulator in figure 3 in the vertical position and figure 5 shows a side view of the part of the simulator in Figure 3 in an inclined position, rotated on the pin 39 and 40 (not shown in this figure).

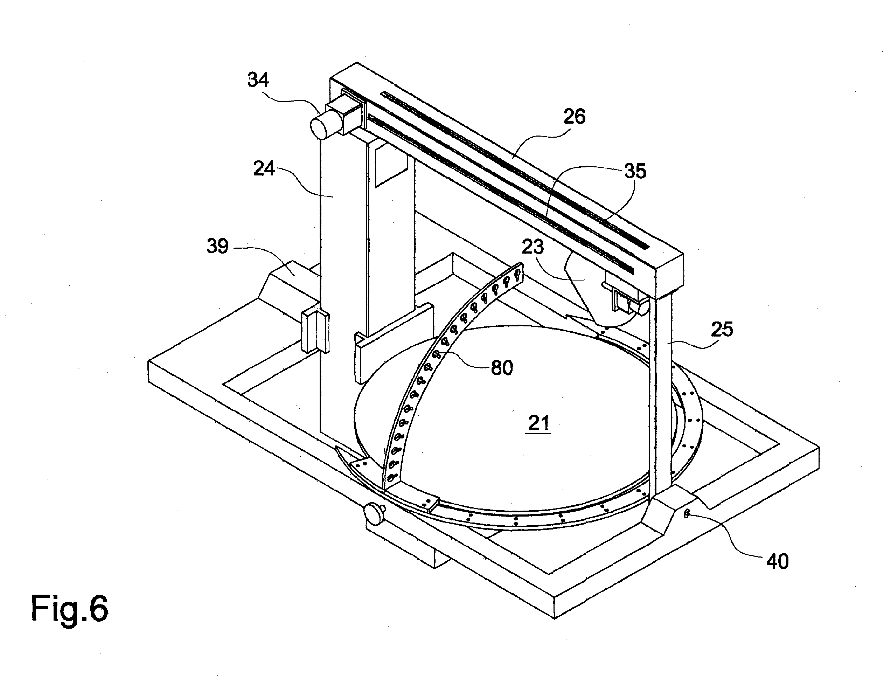

Figure 6 shows a perspective view of the part of the simulator in figure 3 including the support 80 on which it is possible to mount the light sensors for use of the simulator as a photogoniometer.

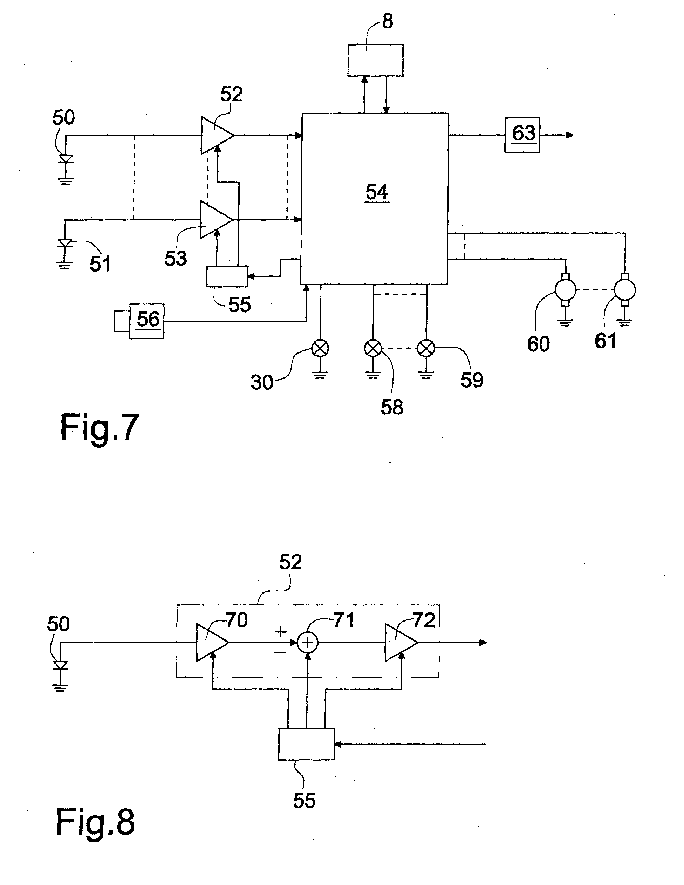

Figure 7 shows a flow diagram of the circuits located on the simulator and includes the photodiodes 50 and 51. Two are shown but the number may vary from 1 to I and there may be other parts capable of measuring the light absorbed. The signal coming from the photodiodes 50 and 51 is amplified respectively by amplifiers 52 and 53 whose signals are sent to a controller 54. The degree of amplification of the amplifiers 52 and 53 is regulated by a control circuit 55 operated by the controller 54.

A TV camera 56 sends its signal to the controller 54. Inside the controller 54 there are analogue/digital converters which convert the signal coming from the TV camera.

The controller 54 operates the lamp 30 and other lights 58 and 59 through an interface. The lights 58 and 59 may vary from 1 to $M$ and are preferably lamps whose light is transmitted to the designated point by fibre optics. The controller 54 also operates, through an interface, the motors 60 and 61 which represent the set of motors for moving all the moving parts of the simulator 1.

The controller 54 also includes a microprocessor, associated memory for running the system and communicates with the exterior through the touch screen monitor 8. In addition, the interface circuit 63 allows the controller 54 to send the data memorised to an external computer.

Figure 8 shows a flow diagram of the control system for the amplification of the photodiode 50.

To obtain the precision suitable for the technical illumination analysis on the model 7, there is a circuit capable of measuring the light intensity in a mode defined as normal and a mode defined as fine, which can be selected from the controller 54.

The signal coming from the photodiode 50 is amplified by a first stage amplification 70. It then comes to a summation node 71 that subtracts a reference voltage coming from the control circuit 55, which includes a digital/ analogue converter, and then comes to a second stage amplification 72.

With this system only a window centred on small variations in the signal from the photodiode 50 reaches the second stage amplification 72. Thus a fine mode operation is obtained to monitor the small variations in the signal.

The normal mode is obtained simply by adjusting the output of the control circuit 55 to zero and changing the gain of the two amplification stages using electronic switches controlled by the control circuit 55.

Thus the controller 54, on the apparatus, controls the movement of the rotating support of the model and the entire optical assembly, it switches on the lamp that reproduces natural light and the LEDs that use fibre optics to feed the diffusers which simulate artificial light, it acquires data from the photodiodes and the TV camera, performs remote storage of the measurements and the partial scansions and manages the remote communications with the terminal used by the user.

The values of illumination measured by the photodiodes are saved in ASCII format while the luminance distribution measured by the TV camera is filed in RGBE binary format. The choice of non-proprietary formats makes it possible to reprocess the data using other commercial applications such as calculation sheets and instruments for graphics and technical illumination.

The terminal used by the user provides the user interface for managing the instrument and manages the post-processing and filing of the results locally.

In order to create a simulation the model 7 to be analysed is fixed to the base 21 of the simulator 1. An assisted process of positioning and calibration is then performed. Using the controls provided on the touch screen 8 on the apparatus, the operator moves the rotating support 21 so that the model 7 is orientated into a well-defined angular position relative to the reference orientation of the simulator 1 and finally performs the process of positioning and calibrating the apparatus.

In the case of partial models 7 of limited height, it is possible to adjust the height of the rotating table 21. Lowering this table in relation to the base of optical assembly 22 makes it possible to find the barycentre position of the part of the model 7 of interest. The user positions the TV camera as desired, jointly with the model on the inside or outside of it, at the same time checking the image visualised on the touch screen 8 on the apparatus. The images taken by the TV camera assist the operator in positioning the photodiodes and artificial lights, which in the latter case can be chosen separately from the control panel of the simulator 1.

The use can input data that identify the project, the version and the author.

On completing this procedure the system automatically orientates the model to the simulation start position in which the north-south direction coincides with the rotational axis of the arm of the optical assembly.

For simulating the sky, once the positioning and calibration procedure has been done the user selects which data to file after each reading, the number of portions $N$ of the sky with which to divide the celestial hemisphere into discrete areas and the number $M$ of lighting apparatuses (artificial sources). The system automatically calculates the $N$ positions of light-model and for each of these the number of partial scans necessary. Finally, it generates a pattern in order to optimise the scanning times. In particular, in figures 4 and 5 there are two configurations of the arm and the second mirror corresponding to the same number of partial scans of the zenithal scan with vertical light beams.

The simulation process is as follows:

1. The lamp of the optical assembly that simulates the sky is switched on.

2. One or more of the motors of the optical assembly is operated according to the optimised pattern.

3. The lamp is allowed to reach stable operation and luminance reading $L_{z,n}^{ref}$ given by the calibration photodiode 41 positioned between the lamp 30 and the first mirror 33 inside the optical assembly, where $z$ is the index of the partial scan in progress, while $n$ is the index of the complete scan.

4. Remote storage on the apparatus of the illuminations referred to a sky of unit luminance (comparing them to the value $L_{z,n}^{ref}$) of the $I$ luxmeters positioned on the model and of the TV camera image. In more detail, in the partial scan $z$ of the scan $n$ for the luxmeters the illumination is normalised (referred to an element of a sky of unit luminance, value $L$)

$$E_{i,z,n}^{norm} = E_{i,z,n} \frac{L'}{L_{z,n}^{ref}}$$

with illumination $E_{i,z,n}$ read by the luxmeter $i$ with $i$ varying from 1 to $I$ , and the normalised luminance

$$V_{p,z,n}^{norm} = V_{p,z,n} \frac{L'}{L_{z,n}^{ref}}$$

with $V_{p,z,n}$ the luminance of each single pixel $P$ of which the image taken by the TV camera is composed.

5. If the number of partial scans necessary for current scanning is not reached, the process is repeated from point 2.

6. Calculation of the illumination and natural luminance coefficients for sunlight and the light of the sky $D^s$, $T^s$ and their filing locally. If $Z_n$ is the number of partial scans necessary for the general scan $n$ , for each $i$ that varies from 1 to $I$ we obtain the following:

$$\Delta E_{i,n}^{norm} = \sum_{z}^{Zn} E_{i,z,n}^{norm}$$

$$D_{i,n}^{s} = \frac{\Delta E_{i,n}^{norm}}{L' \Delta S_n}$$

for the luminance

$$\Delta V_{p,n}^{norm} = \sum_{z}^{Zn} V_{p,z,n}^{norm}$$

and

$$T_{p,n}^{s} = \frac{\Delta V_{p,n}^{norm}}{L' \Delta S_n}$$

where $\Delta S_n$ is the solid angle subtended by the portion of the sky characterising the scan.

7. If the number of scans is still less than $N$ and if required by the pattern calculated previously, the model is rotated and the process repeated from point 2.

8. The sky is switched off and the artificial light mth may be switched on if required.

9. Measurement of illuminations and of normalised artificial luminance values (referred to the source of unit total luminous flux $\varphi'$) for the mth source :

$$E_{i,m}^{norm} = E_{i,m} \frac{\varphi'}{\varphi_m^{fiber}}$$

and

$$V_{p,m}^{norm} = V_{p,m} \frac{\varphi'}{\varphi_m^{fiber}}$$

where $\varphi_m^{fiber}$ is the luminous flux, characteristic of the apparatus, emitted by the fibre optic diffuser and filing of the illumination factors and artificial luminance factor:

$$D_{i,m}^{a} = \frac{E_{i,m}^{norm}}{\varphi'}$$

and

$$T_{p,m}^{a} = \frac{\mathrm{V}_{p,m}^{norm}}{\varphi'}$$

10. *If m* is lower than *M* (number of artificial sources in use) then point 9 is repeated.

11. Conclusion of the mechatronic simulation. At this point the user may specify any type of sky and the client application will calculate the technical illumination requirements of the project under study beginning with the data filed locally. It is possible to simulate all kinds of sky, overcast, clear or statistical defined on the basis of the data measured by the IDMP (International Daylight Measuring Programme, meteorological stations promoted by the CIE, Commission Internationale de l'Eclairage, in 1991 and present to some extent throughout the world), multiplying the coefficients Ds by the luminance of the sky in the direction of the zenithal angle beta and azimuthal angle alpha. In detail the above calculation consists of the following sums: for each i that varies from 1 to *I* we have

$$E_{i} = \sum_{n=1}^{N} D_{i,n}^{s} S_{n} L_{n} + \sum_{m=1}^{M} D_{i,m}^{a} \varphi_{m}$$

and for each pixel *P* of the image

$$V_{p} = \sum_{n=1}^{N} T_{p,n}^{s} S_{n} L_{n} + \sum_{m=1}^{M} T_{p,m}^{a} \varphi_{m}$$

where $L_{n}$ is the luminance of the sky, $S_{n}$ the solid angle subtended by the nth element of the sky, Ds and Ts respectively are the lighting and natural luminance coefficients, $\varphi_{m}$ the luminous flux emitted by the mth source, Da and Ta the illumination and artificial luminance factors.

The predictive technique used in the scanner is based on the illumination coefficient approach. This approach makes it possible to predict the variations in illumination accurately and efficiently for all conditions of the sky, sun and artificial illumination.

The approach using the illumination coefficients derives from an extension of the approach using the Daylight Factor DF. The DF approach is used to obtain a first approximation to the annual contribution of natural light; it is evaluated considering the sky to be completely overcast according to CIE standards and expresses the relationship between the illumination of the point considered and the external illumination at a point exposed to the entire sky without obstructions.

In general studies using distributions other than those of the CIE overcast sky are rarely carried out and are not suitable for the determination of the potential illumination during the course of the year and therefore it is necessary to consider all the skies over a one year period. The typical procedure for evaluating this potential requires the retrieval of basic climatic data for the area, such as diffuse and overall radiation, from which it is possible to generate a luminance distribution of the sky according to a model and determine the illumination for the points in consideration. The thermal loads for natural illumination and the artificial illumination are calculated. The approach using illumination coefficients described by Peter Tregenza in 1983 simplifies the study subdividing the sky into x small parts, measuring and filing the illumination at a given point from a part of the sky of unit luminance and reconstructing each sky beginning with x coefficients.

The illumination coefficients required by Tregenza concerned only natural illumination, here instead there are also artificial light sources which are considered separately (each may be further divided into parts by the user on the basis of the photometric characteristics of the apparatus to be reproduced)

The illumination for a point *i* is defined as:

$$E_{i} = E_{i}^{s} + E_{i}^{\alpha}$$

This equation gives the total illumination at the point *i* as the sum of the illumination due to natural illumination *s* and the artificial illumination *a* .

The natural illumination coefficient for a point i due to a small part of the sky is defined as:

$$D^s_{i,\alpha,\beta} = \frac{\Delta E_{i,\alpha,\beta}}{L_{\alpha,\beta}\Delta S_{\alpha,\beta}}$$

where: $\alpha$ is the azimuthal angle; $\beta$ is the zenithal angle; $\Delta E_{i,\alpha,\beta}$ is the illumination produced at a point by the part of the sky identified by $\alpha$ and $\beta$; $^L\alpha,\beta$ is the luminance of the sky element considered and $\Delta S_{\alpha,\beta}$ is the solid angle subtended by the sky element.

Similarly the illumination factor due to artificial sources is defined as:

$$D^a_{i,m} = \frac{E_{im}}{\varphi_m}$$

in which the numerator represents the illumination produced by the mth source and the denominator the luminous flux $\varphi$ m emitted by the illumination apparatus under consideration.

The values of the coefficients $D^s_{i,\alpha,\beta}$ and $D^\alpha_{i,m}$ are independent of the distribution of the luminance of the sky and the luminous flux of the apparatus, since the illumination (*E*) varies in proportion to *L* (or $\varphi$ ). Therefore it is possible to calculate the coefficients in normalised conditions (in other words with a sky of unit luminance and sources of unit flux) so as to then use them to calculate the illuminations (or luminance values) for specific conditions, knowing the values of luminance and luminous flux.

If the sky is divided into *N* equal angular elements and in the model there are M light apparatuses then the total illumination is given by:

$$E_i = \sum_{n=1}^{N} D^s_{i,n} S_n L_n + \sum_{m=1}^{M} D^a_{i,m}\varphi_m$$

This formula gives the illumination as the sum of *N* products $D_s$ , *S* and *L* for each sky element and as the sum of *M* products of $D_a$ and $\varphi$ for each artificial light apparatus. The *N* values $D_s$ , *S* and *L* and the *M* values of $D_a$ and $\varphi$ can be treated as vectors $\boldsymbol{D}^a = [D^a_1, D^a_2,...,D^a_M ]$.

Also, if we take into consideration the *I* measuring points, the coefficients can be represented as matrices *i* × *n*. If the illumination is described by a column vector of *I* elements, corresponding to the number of measuring points, and the column vector c is formed from the products of the solid angles and the luminance then the following compact matrix formula is obtained:

$$E = D^s \times c + D^a \times \Phi$$

Similarly for the illumination the factors *T* for the natural luminance can be defined:

$$T^s_{p,\alpha,\beta} = \frac{\Delta V_{p,\alpha,\beta}}{L_{\alpha,\beta}\Delta S_{\alpha,\beta}}$$

and for artificial sources:

$$T^a_{p,m} = \frac{\Delta V_{p,m}}{\varphi_m}$$

where $\Delta V$ is the luminance detected by the TV camera on the pth pixel.

Therefore the luminance of the pth pixel is given by:

$$V_p = \sum_{n=1}^{N} T_{p,n}^{s} S_n L_n + \sum_{m=1}^{M} T_{p,m}^{a} \varphi_m$$

and in compact matrix form:

$$V = T^{s} \times c + T^{a} \times \Phi$$

For the simulation of the sun, after carrying out the positioning and calibration procedure, the user defines the place and time or angle of incident rays from the sun and in response the system automatically orientates the model. The working process is then similar to that for the sky simulation with the difference that in this case there will be a single scan obtained from $Z_1$, partial scans.

For the simulation of artificial light, having carried out the positioning and calibration procedure, the user selects the lights and data concerned and the system automatically performs the reading and filing of the measurements required separately for each light.

The simulator 1 may also be used as a photogoniometer, to characterise new materials or simply materials whose optical properties are not known from the standpoint of technical illumination. The applications as photogoniometer are therefore numerous, including also the definition and calibration of the mathematical model characterising the material and used in software simulators.

In this case the user carries out the normal procedure of positioning and calibration with the difference that in this case the *I* photodiodes will be positioned by means of rapid connections on a fixed vertical structure 80, along an arc of 90° and of radius equal to the radius of the maximum overall spherical cover acceptable for the model. This structure may be moved quickly to other positions anchoring it to the numerous seats provided on the base of the optical assembly.

The user defines the relative light-material positions indicating the angles of rotation and the position of the lights and the material. The possibility of moving the photodiode support and the position of the material makes it possible to study the technical illumination properties of anisotropic materials. The working of the mechatronic simulation is similar to that described for the simulation of the sky.

**Claims**

1. Simulation system for the illumination of a model:

   a light source that provides a first light radiation of said model;
   said model is placed on a structure;
   said structure and said light source can be moved relative to each other by at least one movement device;
   a first computer controls said movement device and serves to move said structure and said light source relative to each other;
   at least one light sensitive sensor, located on said model illuminated by said first light radiation, that sends a signal proportional to the incident light to said first computer;
   said first computer moves said structure and said light source to predetermined positions so that said light source illuminates said model in a predetermined way;
   said first computer receives said signal proportional to the incident light for each predetermined position and memorises the signal;
   said first computer is connected to a second computer to which it sends the memorised signals.

2. The simulation system in accordance with claim 1 **characterised in that** it includes a TV camera that registers an image of said model illuminated by said first light radiation and sends images of said model to said first computer.

3. The simulation system in accordance with claim 1 **characterised in that** it includes at least one second light source which can be positioned as desired over said model.

4. The simulation system in accordance with claim 1 **characterised in that** said structure and said light source are moved in relation to each other so that said first light source illuminates portions of said model.

5. The simulation system in accordance with claim 1 **characterised in that** a container, which can be opened and retracted out of view, contains said light source, said model, said movement device, said first computer connected to a display and said sensor.

6. The simulation system in accordance with claim 1 **characterised in that** said movement device is arranged so that said light source can move in relation to said model along an arc of circle equal to or less than 180°.

7. The simulation system in accordance with claim 1 **characterised in that** said movement device includes a mirror that slides along a guide placed above said model.

8. The simulation system in accordance with claim 1 **characterised in that** said movement device includes a mirror that can rotate along the central axis of the mirror.

9. A photogoniometer including a simulation system for the illumination of a model in accordance with claim 1.

10. A method of simulating the illumination of a model consisting of the following steps:

   a lamp is switched on;
   the value from a calibration light sensor is measured;
   the various parts of a model are illuminated from various angles;
   the data from a number of light sensors placed in predetermined positions in said model are collected;
   the data collected is normalised with the value of said calibration light sensor;
   the normalised information relative to the individual parts of the model is recomposed;
   the normalised data is memorised;
   the said normalised information is processed.

Fig.1

Fig.2

Fig.3

EP 1 536 396 A2

Fig.4

Fig.5

Fig.6

Fig.7

Fig.8